# EUROPÄISCHE PATENTSCHRIFT

(11) **EP 3 087 147 B1**
(45) Veröffentlichungstag und Bekanntmachung des Hinweises auf die Patenterteilung: **15.01.2020**
(21) Anmeldenummer: 14815769.6
(22) Anmeldetag: 22.12.2014
(51) Int. Cl.: C09D 5/00, C08K 3/30, C09D 7/61, F16C 33/20

(54) **GLEITLACKBESCHICHTUNG UND GLEITLAGER-SCHICHTVERBUNDWERKSTOFF MIT SOLCHER BESCHICHTUNG**
SLIDING LACQUER COATING AND SLIDE BEARING LAMINATE WITH SUCH A COATING
REVETEMENT DE VERNIS GLISSANT ET LAMINÉ POUR PALIER LISSE AVEC UN TEL REVÊTEMENT

(30) Priorität: 27.12.2013 DE 102013227186
(43) Veröffentlichungstag der Anmeldung: 02.11.2016
(73) Patentinhaber: Federal-Mogul Wiesbaden GmbH, 65201 Wiesbaden (DE)
(72) Erfinder: ADAM, Achim, 64569 Nauheim (DE); SCHLÜTER, Joachim, 65201 Wiesbaden (DE)
(74) Vertreter: Mehler Achler
(86) Internationale Anmeldenummer: PCT/EP2014/079009
(87) Internationale Veröffentlichungsnummer: WO 2015/097159

(56) Entgegenhaltungen:
- EP-A1- 0 984 182
- EP-A1- 2 070 996
- WO-A1-2005/080810
- DE-A1- 3 601 568
- DE-A1-102009 043 435

## Beschreibung

Die Erfindung betrifft eine Gleitlackbeschichtung mit einem Binder und mit das Gleitverhalten begünstigenden Füllstoffen. Die Erfindung betrifft ferner einen Gleitlager-Schichtverbundwerkstoff mit einer solchen Gleitlackbeschichtung und des Weiteren die Verwendung eines solchen Gleitlager-Schichtverbundwerkstoffes in einem Lagerelement für einen Verbrennungsmotor, insbesondere in einer Lagerschale eines Kurbelwellenlagers oder eines Pleuellagers, in einer Pleuelbuchse oder auf eine Anlaufscheibe.

Gleitelemente in Verbrennungsmotoren bestehen meist aus mehrschichtigen Materialien mit speziell modifizierten Oberflächen, die deren Gleiteigenschaften optimieren. In der Regel handelt es sich bei den Oberflächen von Gleitlagern um metallische Schichten, etwa auf Basis von Blei, Zinn oder Aluminium, die durch galvanische Prozesse, Bedampfung oder durch mechanische Plattierung aufgebracht werden. Es sind auch nichtmetallische Gleitschichten bekannt, die eine Kunstharzbasis aufweisen und die hinsichtlich ihrer Gleiteigenschaften, Belastbarkeit und Verschleißfestigkeit in gewissen Grenzen an die Anforderungen der Lagerstelle anpassbar sind.

Insbesondere Gleitlackbeschichtungen auf Kunstharzbasis werden seit vielen Jahren als Hilfsmittel zur Verringerung der Reibung mechanischer Komponenten eingesetzt. In der Regel werden Metall-, Kunststoff- und Gummiteile beschichtet, die ohne weitere Schmierung dauerhaft leicht beweglich sein müssen. In den typischen Anwendungen sind die Belastungen eher gering und die Randbedingungen wie Temperatur und Medienkontakt unkritisch. Aus verschiedenen Patentanmeldungen, wie der EP 0 984 182 A1 ist darüber hinaus bekannt, dass Gleitlacke auch im Verbrennungsmotor, z. B. als Kurbelwellenlagerung, zur Anwendung kommen können.

Nachteil der bekannten Gleitlackbeschichtungen ist grundsätzlich aber eine relativ hohe, jedoch scharf begrenzte Belastbarkeit, die bei Überschreitung zu einer schnellen Zerstörung der Beschichtung führt. Das darunterliegende Substrat wird daraufhin freigelegt. Wenn das Substratmaterial über keine ausreichenden Notlaufeigenschaften verfügt, hat dies ein Totalversagen der Lagerung durch Fressen zur Folge.

Als Substrat ist bei solchen Lagern üblicherweise eine Kupfer- oder Aluminiumlegierung zu finden. Der Binder, auch Matrixmaterial genannt, besteht üblicherweise aus PAI, PI, Epoxidharz, Phenolharz oder PBI, vgl. EP 1 775 487 A2. In der EP 0 984 182 A1 werden daneben noch PEI, PEEK, aromatische Polyamide, PTFE und andere Fluorpolymere wie PFA, ETFE und FEP als Kunststoffe für die Beschichtung mit Gleitmaterial genannt, wobei in diesem Zusammenhang jedoch keine Gleitlacke, sondern pastös aufgetragene, meist dickere Kunststoffschichten angesprochen sind, die unter Druck in eine offenporige Struktur des Substrats, beispielsweise in die Poren eines metallischen Sintergerüstes eingebracht werden und die Gleitschicht so in dem Substrat verankern. Eine solche Beschichtung ist beispielsweise in der EP 1 390 629 B1 beschrieben. Sie fällt nicht unter die vorliegende Gattung der Gleitlackbeschichtungen. Prominentester Vertreter solcher Kunststoffschichten sind solche auf PTFE-Basis. Diese sind zudem nicht hinreichend tragfähig, so dass sie für hochbelastete Lager nicht in Betracht kommen.

Gleitlacke zeichnen sich hingegen dadurch aus, dass sie beim Applizieren in einem niederviskosen Zustand vorliegen, z.B. in Lösung oder Dispersion, oder einen solchen durchlaufen, z.B. durch Aufschmelzen, so dass sie ohne Einwirkung von Druck eine glatt verlaufende, geschlossene Oberfläche ausbilden. Das Aufbringen der Gleitlackbeschichtung erfolgt durch Sprüh- oder Druckverfahren und anschließendes thermisches Aushärten oder Aushärten unter UV-Licht. Der Binder eines Gleitlackes geht während des anschließenden Trocknungs- oder Härtungsprozesses durch chemische oder physikalische Vernetzung oder chemische Umwandlung in eine schwerer lösliche oder schwerer schmelzbare Form über, so dass die Gleitschicht eine formstabile und hochbelastbare dünne Schicht auf einem Substrat ausbildet. Die sich von selbst, d.h. ohne Druckeinwirkung ausbildende glatte Oberfläche ermöglicht das Applizieren einer gleichmäßig dicken Gleitlackbeschichtung auf bereits umgeformten Gleitelementen, wie beispielsweise Lagerschalen, was im Fall der pastös aufgetragenen Beschichtung nicht möglich ist, weil hier eine Beschichtung nur am bandförmigen Halbzeug, d.h. vor der letzten mechanischen Bearbeitung der Gleitelemente, wirtschaftlich sinnvoll erfolgen kann.

Typische funktionale Füllstoffe sind Festschmierstoffe wie MoS₂, WS₂, BN, PTFE, keramische Pulver wie Oxide, Nitride, Carbide, Silicate, Metalle wie Al, Cu, Ag, W, Ni, Au und Fe₂O₃, vgl. WO2010/076306 oder US 6 305 847 B1.

Als weitere Füllstoffe sind BaSO₄ oder ZnS in tribologisch beanspruchten Schichten bereits bekannt. Aus der DE 10 2006 048 311 A1 ist eine Zusammensetzung bekannt, die aus einer Kunststoffmatrix mit höchstens 20% PTFE sowie Zusätzen von 5% bis 15% Bariumsulfat oder Zinksulfid besteht. Die EP 1 716 342 B1 stellt beispielsweise einen Werkstoff mit erhöhtem Porenvolumen und einer Kunststoffmatrix aus 50 Vol.-% PVDF oder 60 Vol.-% PA, PS oder PPS vor, in der über 5 Vol.-% PTFE und wenigstens 5 Vol.-%, vorzugsweise 8 bis 12 Vol.-% Zinksulfid oder Bariumsulfat enthalten sind. Die EP 1 526 296 A2 beschreibt ein Material auf PEEK-, PPS- oder PA-Basis mit einer Hartteilchenkomponente und Kohlefasern, ohne PTFE, mit einem ZnS- oder BaSO₄-Anteil von 5 bis 15 Gew.-%, wobei konkret nur Zusammensetzungen mit ZnS angegeben werden. In der Schrift EP 1 716 342 B1 ist ein Gleitlagerverbundwerkstoff mit einer Gleitschicht auf Polymerbasis angegeben, die Zinksulfid und/oder Bariumsulfat in einem Anteil von wenigstens 5 Vol.-% und bevorzugt 8-12 Vol.-% enthält, wobei konkret nur Zusammensetzungen angegeben werden, die entweder ZnS oder BaSO₄ enthalten. Auch ist die Füllstoffkombination aus Zinksulfid und Bariumsulfat, wahlweise mit weiteren Füllstoffen, bekannt. Die DE 36 01 569 A1 offenbart die Zugabe von feinteiligem ZnS- und BaSO₄ als Zusatz für Polymere in Kunststoff-Verbundgleitlagern, wobei in einem Anteil von 5 bis 40 Vol.-% Zinksulfid, bezogen auf den Matrixwerkstoff, bis zu 5 Vol.-% BaSO₄, bezogen auf die Zinksulfidteilchen, enthalten sein können. Die Ausführungsbeispiele sind so gewählt, dass entweder nur Zinksulfid oder nur Bariumsulfat oder Zinksulfid mit geringen Anteilen von 0,5 Vol.-% Bariumsulfat zum Einsatz kommen. Im Übrigen beziehen sich die angegebenen Schriften allesamt auf selbstschmierende Werkstoffe auf PTFE-Basis, also wiederum auf pastös aufgetragene Werkstoffe, die aus den oben angegebenen Gründen nicht für die in Rede stehenden Anwendungen in Frage kommen und auch nicht zur Gattung der Gleitlackbeschichtungen zählen.

Die Aufgabe der Erfindung ist es, eine weitere Verbesserung der Verschleißfestigkeit und Belastbarkeit von Gleitlackbeschichtungen auf Kunstharzbasis zu erzielen.

Die Aufgabe wird durch eine Gleitlackbeschichtung mit wenigstens 25 Vol.-% eines Binders und mit Füllstoffen, die Zinksulfid und Bariumsulfat und wahlweise weitere Füllstoffe umfassen, gelöst, wobei das Volumenverhältnis von Zinksulfid zu Bariumsulfat zwischen 0,1 und 15,7, bevorzugt zwischen 0,8 und 4,88 und besonders bevorzugt zwischen 1,5 und 3,44 beträgt.

Es hat sich gezeigt, dass sich durch die Füllstoffkombination im genannten Bereich die Eigenschaften von Gleitlackbeschichtungen gegenüber solchen, die entweder nur Zinksulfid oder nur Bariumsulfat oder beide Füllstoffe in einem anderen Verhältnis enthalten, signifikant verbessert sind. Zu diesen Eigenschaften zählen insbesondere die Belastbarkeit und die Verschleißfestigkeit der Gleitlackbeschichtung. Beispielsweise konnte die Spitzenbelastbarkeit bei Kurbelwellenlagern auf bis zu 120 MPa gesteigert werden. Dies ist ein Wert, der ansonsten nur von Aluminium-basierten Sputterschichten erreicht wird.

Die Spitzenbelastbarkeit lässt sich gegenüber Gleitlackbeschichtungen mit nur einer der beiden Komponenten ZnS oder BaSO₄ über den gesamten beanspruchten Bereich des Volumenverhältnisses von Zinksulfid zu Bariumsulfat verringern. In dem engeren Bereich bis zu einem Verhältnis von 1,5 bis 3,44 verbessert sich die Belastbarkeit um bis zu 12 MPa und in dem engsten Bereich des Verhältnisses zwischen 1,5 und 3,44 verbessert sich die Belastbarkeit um bis zu 25 MPa.

Es wird vermutet, dass durch das BaSO₄/ZnS-Gemisch die Wirksamkeit des Schmierfilms verbessert wird, wodurch der Anstieg der Verschleißrate mit der spezifischen Lagerbelastung verringert wird. Hierdurch steigt die Belastungsgrenze an, was wiederum die Betriebssicherheit der Lager bei Belastung unterhalb der Belastungsgrenze signifikant erhöht.

Bevorzugt sind das Zinksulfid und das Bariumsulfat in der Gleitlackbeschichtung zusammen in einem Anteil von 2 bis 35 Vol.-% und besonders bevorzugt von 5 bis 25 Vol.-%, enthalten.

Bei kleineren Gesamtanteilen ist keine signifikante Verbesserung der Verschleißfestigkeit und der Belastbarkeit feststellbar. Größere Anteile beider Füllstoffe führen zu einer Schwächung der Bindermatrix.

Vorzugsweise wird die Gesamtzusammensetzung durch Zugabe weiterer Füllstoffe optimiert. Als Füllstoffe werden in diesem Zusammenhang alle Komponenten außer dem Binder bezeichnet. Die gesamte Füllstoffmenge, also der Anteil des Zinksulfids, des Bariumsulfats und der weiteren Füllstoffe beträgt vorzugsweise maximal 75 Vol.-%, besonders bevorzugt nicht mehr als 60 Vol.-% der Gesamtzusammensetzung der Gleitlackbeschichtung.

Es hat sich weiterhin als vorteilhaft herausgestellt, dass das Zinksulfid und das Bariumsulfat in Pulverform mit einem d50-Wert im Bereich von 0,1 µm bis 1,0 µm vorliegen. Dabei sollten die Primärkorngrößen, also die Größen der Einzelkörner, nicht die von Agglomeraten, von BaSO₄ und ZnS zwischen 0,01 µm und 5 µm liegen.

Durch diese Wahl der Körnung des Pulvers lässt sich die Verschleißrate effektiv reduzieren. Zugleich ist die Dispergierbarkeit der Füllstoffe in der Gleitlackbeschichtung sehr gut, wodurch eine homogene Gleitlackbeschichtung auf einfache Weise sichergestellt werden kann.

Besonders bevorzugt liegt der Zinksulfid- und Bariumsulfat-Anteil in Form von Lithopone vor.

Lithopone ist ein durch gemeinsame Fällung von Zinksulfid und Bariumsulfat erzeugtes Gemisch, das mit Zusammensetzungen von 10:90 bis 60:40, was einem Volumenverhältnis von Zinksulfid zu Bariumsulfat von 0,11 bis 1,5 entspricht, erhältlich ist.

Besonders bevorzugt ist der Binder ausgewählt aus der Gruppe bestehend aus PAI, PI, Epoxidharze, PBI, Silikonharze und hocharomatische Thermoplaste, insbesondere Polyarylate, PEEK und PES.

All diese Stoffe sind aufgrund ihrer hohen Temperatur- und Medienbeständigkeit für die Anwendung in den Gleitlagern eines Verbrennungsmotors besonders geeignet.

Die Dicke der Gleitlackbeschichtung beträgt vorzugsweise 1 µm bis 40 µm. Hierbei ist zu beachten, dass die Schichtdicke der Bauteilgröße angepasst sein sollte. Es gilt insbesondere, dass für Radiallager mit einem Durchmesser bis 100 mm eine Schichtdicke von 5 bis 25 µm bevorzugt ist. Bei Großlagern über 100 mm Durchmesser ist eine Schichtdicke bis 40 µm, in Ausnahmefällen auch bis 50 µm bevorzugt, weil sich bei den Großlagern regelmäßig ein erhöhter Einlaufverschleiß durch Geometriefehler und/oder größere Toleranzen ergibt.

Eine besonders bevorzugte Ausführungsform der Gleitlackbeschichtung sieht vor, dass die weiteren Füllstoffe wenigstens einen Festschmierstoff enthalten.

Der Festschmierstoffanteil sollte vorzugsweise mindestens gleichgroß wie der ZnS/BaSO₄ Anteil sein, und besonders bevorzugt in der 1- bis 5,7-fachen Menge des ZnS/BaSO₄-Gemisches eingesetzt werden.

Durch Zusätze von Festschmierstoffen werden insbesondere die Notlaufeigenschaften, d. h. das Verhalten bei nicht hydrodynamischen Betriebszuständen, verbessert.

Weiterhin bevorzugt sind die Festschmierstoffe ausgewählt aus einer Gruppe umfassend Metallsulfide mit Schichtstruktur, Graphit, hexagonales Bornitrid und PTFE.

Vorteilhaft ist es ferner, dass die weiteren Füllstoffe wenigstens einen Hartstoff mit einem Gesamtanteil von nicht mehr als 10 Vol.-%, bezogen auf die Gleitlackbeschichtung, enthalten. Der oder die Hartstoffe dienen als Verschleißminderer in Kontakt mit dem Gegenläufer, bei einem Radiallager beispielsweise einer Welle, zur Konditionierung desselben. Insbesondere werden in einer Einlaufphase Unebenheiten und/oder eine zu große Rauheit der Wellenoberfläche zügig abgetragen, bis die Wellenoberfläche an die Oberfläche der tragenden Gleitschicht des Lagers angepasst ist. Die Hartstoffanteile sollten dabei einen Volumenanteil von 10% nicht übersteigen, da diese sich sonst zu stark abrasiv auf die Lauffläche des Gegenläufers auswirken und die Gleiteigenschaften des Lagers insgesamt verschlechtern.

Der wenigstens eine Hartstoff ist bevorzugt ausgewählt aus einer Gruppe umfassend Nitride, Carbide, Boride, Oxide, insbesondere SiC, Si₃N₄, B₄C₃, c-BN (kubisches Bornitrid), TiO₂, und SiO₂.

In einer weiteren vorteilhaften Ausgestaltung enthalten die weiteren Füllstoffe wenigstens ein Metallpulver mit einem Gesamtanteil von nicht mehr als 30 Vol.-%, bezogen auf die Gleitlackbeschichtung.

Solche Metallpulver dienen einer Erhöhung der Wärmeleitfähigkeit und somit zu einer geringeren Gleichgewichtstemperatur, was insbesondere die Dauerbelastbarkeit thermisch hochbeanspruchter Gleitlager in Verbrennungsmotoren signifikant erhöht. Der Volumenanteil des Metallpulvers soll nach Möglichkeit 30% nicht übersteigen, da sich größere Anteile schlecht in dem Gleitlack dispergieren lassen und daher negativ auf dessen Verarbeitbarkeit auswirken.

Das wenigstens eine Metallpulver ist vorzugweise ausgewählt aus einer Gruppe umfassend die Elemente Ag, Pb, Au, Sn, Al, Bi, Cu sowie Legierungen dieser Elemente.

Ganz besonders bevorzugt weist die Gleitlackbeschichtung als weiteren Füllstoff bis zu 15 Vol.-%, bevorzugt 1 bis 10 Vol.-% Eisen-(III)-oxid auf.

Dieser Füllstoff hat sich insbesondere zur Verringerung der Verschleißrate in Verbindung mit den Füllstoffen Zinksulfid und Bariumsulfat in den erfindungsgemäßen Anteilen als hilfreich erwiesen.

Die vorgenannten Füllstoffe können in Summe in einer Höchstmenge von 75 Vol.-%, bezogen auf die gesamte Gleitlackbeschichtung und jeweils innerhalb der angegebenen Bereichsgrenzen in der Gleitlackbeschichtung vorliegen. Der Rest, also wenigstens 25 Vol.-% besteht dementsprechend aus besagtem Binder.

Die Aufgabe wird weiterhin durch einen Gleitlackschichtverbund mit wenigstens zwei Gleitlackbeschichtungen unterschiedlicher Zusammensetzungen innerhalb der vorstehend angegebenen Parameterbereiche gelöst.

Auf diese Weise kann ein Mehrschichtsystem aus BaSO₄- und ZnS-haltigen Gleitlacken bereitgestellt werden, welches an im Laufe des Betriebs geänderte Betriebsbedingungen stets optimal angepasst ist. Konkrete Ausführungsbeispiele hierzu folgen.

Gemäß einem weiteren Aspekt sieht die Erfindung einen Gleitlager-Schichtverbundwerkstoff mit mindestens einer Metallschicht und einer auf der Oberfläche der Metallschicht aufgebrachten Gleitlackbeschichtung oder einem auf der Oberfläche der Metallschicht aufgebrachten Gleitlackschichtverbund mit den vorstehend genannten Merkmalen vor.

Die mindestens eine Metallschicht bildet das Substrat, auf dessen Oberfläche sich gemäß einer vorteilhaften Weiterbildung ein Gleitlackschichtverbund mit einer auf der Metallschicht aufgebrachten unteren Gleitlackbeschichtung und einer auf der unteren Gleitlackbeschichtung aufgebrachten oberen Gleitlackbeschichtung befindet.

Bei einer vorteilhaften Ausgestaltung ist auf der Oberfläche der Metallschicht ein Gleitlackschichtverbund mit einer auf der Metallschicht aufgebrachten unteren Gleitlackbeschichtung mit Festschmierstoffen und/oder Metallpulver und einer auf der unteren Gleitlackbeschichtung aufgebrachten oberen Gleitlackbeschichtung mit Hartstoffen angeordnet. Die obere, mit dem Gegenläufer zuerst in Kontakt kommende Gleitlackbeschichtung ist funktional als eine Einlaufschicht ausgelegt, die durch den Einsatz von Hartpartikeln der Konditionierung des Gegenläufers (der Welle) dient. Die darunterliegende Gleitlackbeschichtung ist als Lebensdauerschicht ausgelegt und weist innerhalb der vorstehend angegebenen Grenzen einen höheren Anteil an Metallpulvern und Festschmierstoffen und im Wesentlichen keine oder weniger Hartstoffe auf und ist deshalb wesentlich verschleißfester.

Eine alternative vorteilhafte Ausgestaltung sieht vor, dass auf der Oberfläche der Metallschicht ein Gleitlackschichtverbund mit einer auf der Metallschicht aufgebrachten unteren Gleitlackbeschichtung und einer auf der unteren Gleitlackbeschichtung aufgebrachten oberen Gleitlackbeschichtung mit einem verringerten Anteil des Binders, verglichen mit der unteren Gleitlackbeschichtung, angeordnet ist. Die Füllstoffzusammensetzung kann dabei im einfachsten Fall gleich sein, jedoch auch unterschiedlich. Die abermals als Einlaufschicht ausgelegte obere Gleitlackbeschichtung erfährt durch den geringeren Binderanteil eine beschleunigte Anpassung an geometrische Gegebenheiten wie zum Beispiel eine Schiefstellungen oder eine Durchbiegung der Welle, wodurch lokale Überbelastungen, z.B. im Kantenbereich der Lagerelemente verringert oder vermieden werden.

Der Gleitlager-Schichtverbundwerkstoff kann ferner unter der Lebensdauerschicht, d. h. in unmittelbarem Kontakt mit der Oberfläche der Metallschicht eine zusätzliche Gleitlackbeschichtung aufweisen, die die Betriebssicherheit der Lager dadurch weiter erhöht, dass sie insbesondere bezüglich ihrer Verschleißfestigkeit optimiert ist, d. h. insbesondere ein vollständiges Durchlaufen auf das Lagermaterial hinauszögern, nachdem die Lebensdauerschicht verschlissen ist. Dies wird z.B. durch einen erhöhten Anteil des Binders oder/und eine erhöhte Menge an verschleißhemmenden Hartpartikeln erreicht.

In einer alternativen Ausgestaltung kann eine zusätzliche Schicht zwischen der Metallschicht und der unteren Gleitlackbeschichtung vorgesehen sein, die hinsichtlich der Haftung des Gleitlackschichtverbundes auf der Metallschicht optimiert ist. Diese hat die Wirkung einer Grundierung und kann in der Regel bereits durch eine geringe oder gar nicht mit Füllstoffen versehene, sehr dünne, insbesondere wenige µm dicke Schicht erzielt werden.

Der Gleitlackschichtverbund kann in Form diskreter Lagen von Gleitlackbeschichtungen unterschiedlicher Zusammensetzung oder als Gradientenschicht realisiert werden, bei der die Schichtzusammensetzung und somit die Schichteigenschaften kontinuierlich ineinander übergehen.

Der erfindungsgemäße Gleitlager-Schichtverbundwerkstoff ist vorzugsweise dadurch weitergebildet, dass die Oberfläche der mindestens einen Metallschicht, auf der die Gleitlackbeschichtung aufgebracht ist, eine Rauheit R_{Z} von 1 µm bis 10 mm, vorzugsweise von 3 µm bis 8 µm aufweist.

Eine Rauheit in diesem Bereich verbessert die Haftung der unmittelbar auf die Oberfläche aufgebrachten Gleitlackbeschichtung. Des Weiteren führt eine solche Rauheit dazu, dass bei einem allmählichen Verschleiß der Gleitlackbeschichtung der Gegenläufer zunächst nur punktuell mit einzelnen Spitzen der Metallschicht in Kontakt kommt, die zunächst nur einen geringen Oberflächenanteil der exponierten Gleitfläche ausmachen, wodurch sich deren Tragfähigkeit erhöht. Dies wirkt einem weitergehenden Verschleiß entgegen, bevor die gesamte Oberfläche der Metallschicht mit dem Gegenläufer in Berührung kommt und dadurch die Fressanfälligkeit großer freigelegter Bereiche zu einem Totalversagen des Lagers führt.

Die vorteilhafte Oberflächenrauheit kann durch mechanische Abrasion der Metalloberfläche, beispielsweise durch Sandstrahlen oder Schleifen, oder durch chemischen Abtrag, beispielsweise durch Phosphatieren oder Ätzen, erzeugt werden. Alternativ zu unregelmäßigen Rauheiten sind auch regelmäßige Substratstrukturen, die etwa durch Bohren, Räumen oder Prägen entstehen können, als Rauheiten im Sinne dieser Ausgestaltung zu verstehen.

Der Gleitlager-Schichtverbundwerkstoff ist vorteilhafterweise dahingehend weitergebildet, dass die mindestens eine Metallschicht eine Lagermetallschicht oder eine Deckschicht aus einer Legierung auf Basis eines der Elemente, ausgewählt aus der Gruppe bestehend aus Cu, Al, Ni, Sn, Zn, Ag, Au, Bi und Fe aufweist.

Die Metallschicht kann also sowohl als vergleichsweise dicke Tragschicht als auch als dünne Deckschicht ausgebildet sein, wobei die Gleitlackbeschichtung je nach Zusammensetzung als zusätzliche Einlaufschicht zur Anpassung bzw. Konditionierung des Gegenläufers oder als eigenständige Gleitschicht mit hoher Lebensdauer ausgebildet sein kann.

Besonders bevorzugt ist die mindestens eine Metallschicht eine Lagermetallschicht oder Deckschicht aus einer Legierung, ausgewählt aus der Gruppe, bestehend aus CuSn, CuNiSi, CuZn, CuSnZn, AlSn, AISi, AlSnSi und AlZn. Einzelne besonders bevorzugte Kandidaten sind die Legierungen CuNi2Si, CuSn8Ni, CuSn10Bi3, CuPb23Sn, AlSn10Mn2NiCu, AlSn6Si4CuMnCr und AlNi2MnCu.

Eine weitere vorteilhafte Ausgestaltung des Gleitlager-Schichtverbundwerkstoffes mit einer Lagermetallschicht und/oder einer Deckschicht der vorstehend beschriebenen Art ist dadurch gekennzeichnet, dass die mindestens eine Metallschicht ferner eine Stahlstützschicht, darauf die Lagermetallschicht und/oder Deckschicht und wahlweise eine auf der Lagermetallschicht aufgebrachte Zwischenschicht aus Ni, Ag, Cu oder Fe umfasst, wobei die Gleitlackbeschichtung oder der Gleitlackschichtverbund auf einer Oberfläche der Lagermetallschicht bzw. Deckschicht bzw., sofern vorhanden, auf der Zwischenschicht auf der der Stahlstützschicht abgewandten Seite aufgebracht ist.

Ganz besonders bevorzugt ist die Deckschicht in einem solchen Gleitlager-Schichtverbundwerkstoff als hochbelastbare AlSn-Sputterschicht ausgebildet, wobei die Gleitlackbeschichtung oder der Gleitlackschichtverbund funktional insbesondere als Einlaufschicht ausgelegt ist, d. h., mindestens einen Hartstoff der oben genannten Art umfasst und/oder einen Bindergehalt im unteren erfindungsgemäßen Bereich aufweist.

Die Aufgabe wird weiterhin durch die Verwendung eines Gleitlager-Schichtverbundwerkstoffes gemäß der vorstehend beschriebenen Art in einem Lagerelement für einen Verbrennungsmotor, insbesondere als Lagerschale eines Kurbelwellenlagers, als Lagerschale eines Pleuellagers, als Pleuelbuchse oder als Anlaufscheibe, gelöst.

Funktional handelt es sich bei diesen Lagern um bei modernen Verbrennungsmotoren besonders hochbelasteter Lagerelemente in einer thermisch und chemisch aggressiven Umgebung, in der bislang Gleitlackbeschichtungen weder als Einlaufschicht noch als Gleitschicht als ausreichend belastbar betrachtet wurden.
- Figur 1: eine Prinzipskizze zur Illustration der erfindungsgemäßen Gleitlackbeschichtung auf einem Substrat;
- Figur 2: eine Prinzipskizze zur Illustration eines Ausführungsbeispiels des erfindungsgemäßen Gleitlack-Schichtverbundes auf einem Substrat;
- Figur 3: eine Prinzipskizze zur Illustration eines alternativen Ausführungsbeispiels des erfindungsgemäßen Gleitlack-Schichtverbundes auf einem Substrat;
- Figur 4: eine perspektivische Darstellung einer erfindungsgemäßen Lagerschale mit Gleitlackbeschichtung und
- Figur 5: eine Prinzipskizze zur Illustration des Schichtaufbaus eines erfindungsgemäßen Gleitlager-Schichtverbundwerkstoffes.

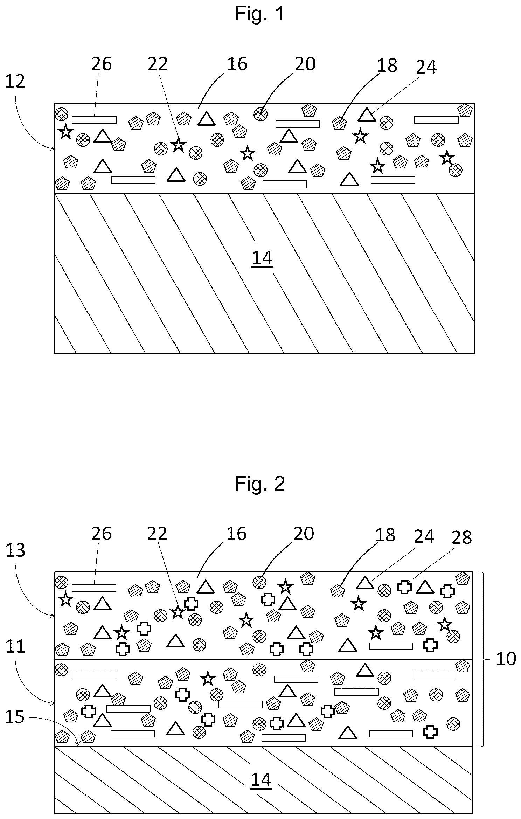

In Figur 1 ist ein einfacher Aufbau mit einer erfindungsgemäßen Gleitlackbeschichtung 12 auf einem nicht näher spezifizierten Substrat 14 schematisch vereinfacht dargestellt. Die geometrischen Verhältnisse, insbesondere die Schichtdicken, sind zu Illustrationszwecken nicht maßstabsgetreu abgebildet. Die Gleitlackbeschichtung 12 besteht aus einem Binder 16 als Matrixkomponente, in die eine Mehrzahl von Füllstoffen eingebettet ist. Als Füllstoffe sind erfindungsgemäß Zinksulfid 18 und Bariumsulfat 20 enthalten. Weiterhin enthält die gezeigte Gleitlackbeschichtung 12 als optionale Füllstoffe Hartstoffpartikel 22, Metallpulverpartikel 24 und Festschmierstoffpartikel 26.

In Figur 2 ist ein exemplarischer Aufbau eines Gleitlackschichtverbundes 10 bestehend aus einer unteren Gleitlackbeschichtung 11 und einer oberen Gleitlackbeschichtung 13 gezeigt. Die untere Gleitlackbeschichtung 11 ist auf einem Substrat 14 und genauer auf dessen Oberfläche 15 aufgebracht und die obere Gleitlackbeschichtung 13 auf der unteren Gleitlackbeschichtung 11. Beide Gleitlackbeschichtungen 11 und 13 weisen neben einem Binder 16 als Matrixkomponente erfindungsgemäß die Füllstoffe Zinksulfid 18 und Bariumsulfat 20 sowie Fe₂O₃ 28 auf, enthalten ansonsten aber unterschiedliche weitere Füllstoffzusammensetzungen. In beiden Gleitlackbeschichtungen 11 und 13 sind exemplarisch wiederum die optionalen Füllstoffe Hartstoffpartikel 22, Metallpulverpartikel 24 und Festschmierstoffpartikel 26 enthalten, jedoch mit unterschiedlichen Schwerpunkten. Während in der Matrix der unteren Gleitlackbeschichtung 11 ein höherer Anteil von Festschmierstoffpartikeln 26 und kaum Hartstoffpartikel 22 enthalten sind, verhält es sich bei der oberen Gleitlackbeschichtung 13 genau umgekehrt. Diese Zusammensetzung ist so gewählt, dass die obere Gleitlackbeschichtung 13, die bei Inbetriebnahme des Lagers zuerst mit dem Gegenläufer in Kontakt tritt, aufgrund der Hartstoffe abrasiv wirkt und ein Einlaufen der Gleitpartner begünstigt. Die untere Gleitlackbeschichtung 11 hingegen tritt erst nach dem Einlaufvorgang, d.h. nach Abnutzung der oberen Gleitlackbeschichtung 13 in Kontakt mit dem Gegenläufer und wirkt sich aufgrund des höheren Festschmierstoffanteils reibungsmindernd aus. Geringe Hartstoffanteile sind von Nutzen, um den Verschleiß der Schicht zu verzögern.

Abweichend von der Darstellung kann in der unteren Gleitlackbeschichtung 11 auf die Hartteilchen aber auch ganz verzichtet werden und/oder in der oberen Gleitlackbeschichtung 13 auf den Festschmierstoff. Im Vordergrund steht hier der erhöhte Anteil der Hartstoffe in der oberen Gleitlackbeschichtung und der erhöhte Anteil der Festschmierstoffe und/oder Metallpulverpartikel in der unteren.

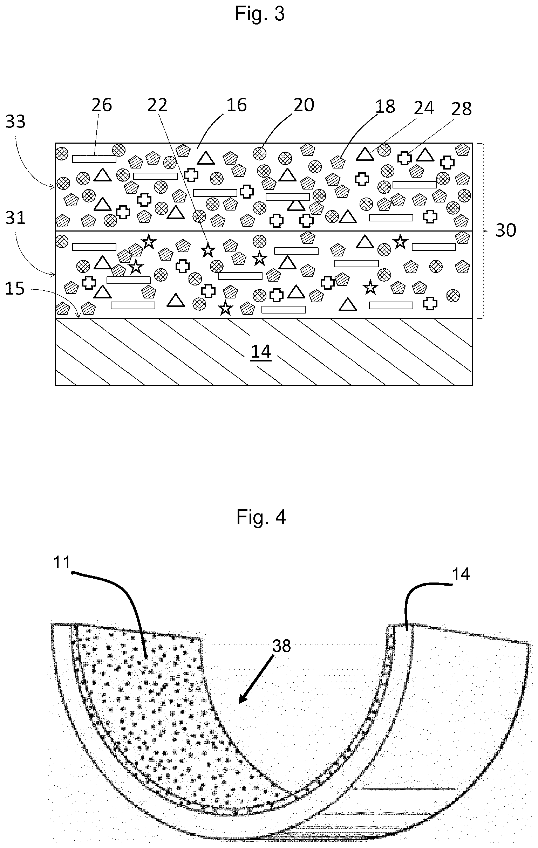

In Figur 3 ist ein alternativer Aufbau eines Gleitlackschichtverbundes 30 bestehend aus einer unteren Gleitlackbeschichtung 31 und einer oberen Gleitlackbeschichtung 33 gezeigt. Die untere Gleitlackbeschichtung 31 ist auf einem Substrat 14 und genauer auf dessen Oberfläche 15 aufgebracht und die obere Gleitlackbeschichtung 33 auf der unteren Gleitlackbeschichtung 31. Beide Gleitlackbeschichtungen 31 und 33 weisen neben einem Bindeharz 16 als Matrixkomponente erfindungsgemäß die Füllstoffe Zinksulfid 18 und Bariumsulfat 20 sowie Fe₂O₃ 28 auf, enthalten ansonsten aber unterschiedliche weitere Füllstoffzusammensetzungen. In beiden Gleitlackbeschichtungen 31 und 33 sind exemplarisch wiederum die optionalen Füllstoffe, Metallpulverpartikel 24 und Festschmierstoffpartikel 26 enthalten. Zusätzlich sind in die Matrix der unteren Gleitlackbeschichtung 31 auch wieder Hartstoffpartikel 22 enthalten. Die obere Gleitlackbeschichtung 33 hingegen enthält einen geringeren Binderanteil und keine Hartstoffpartikel. Diese Zusammensetzung ist so gewählt, dass die obere Gleitlackbeschichtung 33, die bei Inbetriebnahme des Lagers zuerst mit dem Gegenläufer in Kontakt tritt, sich aufgrund des geringeren Binderanteils schneller an den Gegenlaufpartner anpassen kann. Die untere Gleitlackbeschichtung 31 hingegen tritt erst nach dem Einlaufvorgang, d.h. nach Abnutzung der oberen Gleitlackbeschichtung 33 in Kontakt mit dem Gegenläufer und weist aufgrund des höheren Binderanteils höhere Verschleißfestigkeit und Belastbarkeit auf.

Abweichend von der Darstellung kann in der oberen Gleitlackbeschichtung 33 auch eine Hartstoffkomponente enthalten sein. Im Vordergrund steht hier der geringere Anteil des Binders.

Figur 4 zeigt eine Lagerschale 38 in perspektivischer Darstellung, in der ein erfindungsgemäßer Gleitlager-Schichtverbundwerkstoff zum Einsatz kommt. Der Schichtaufbau des Gleitlager-Schichtverbundwerkstoffes ist darauf beschränkt, dass die Gleitlackbeschichtung 11 auf einem nicht differenzierter dargestellten Substrat 14 aufgebracht ist. Das Substrat selbst besteht aus mindestens einer Metallschicht, deren Funktion vielfältig sein kann. Zuerst dient sie der mechanischen Stabilität der Lagerschale. Hierzu weist Sie entweder einen festen Lagermetall-Massivwerkstoff oder eine Stahlstützschicht mit einer darauf angeordneten Lagermetallschicht auf. Die Lagermetallschicht übernimmt in beiden Fällen die tragende Funktion des Lagers. Sie kann zudem dank Notlaufeigenschaften und Einbettfähigkeit für Schmutzpartikel auch für den direkten Kontakt mit dem Gleitpartner ausgelegt sein. Darauf befindet sich dann gegebenenfalls eine Gleit- oder Deckschicht aus Metall. In diesem Fall übernimmt die Gleitlackbeschichtung 11 allein die Funktion einer Einlaufschicht. Andernfalls kann die Gleitlackbeschichtung 11 selbst bei Wahl geeigneter Füllstoffe als Gleitschicht fungieren. Natürlich kann anstelle der einfachen Gleitlackbeschichtung 11 ein Gleitlackschichtverbund mit unterschiedlichen Funktionen vorgesehen sein, wie vorstehend an Hand von Figur 2 und Figur 3 erläutert.

Alle Gleitlacke sind niedrig viskos, so dass sie beim Auftragen insbesondere durch Sprühverfahren ohne Einwirkung von Druck eine glatt verlaufende Oberfläche ausbilden. Nach dem anschließenden Trocknungs- oder Härtungsprozess (thermisch oder unter UV-Licht) ist der Binder des Gleitlackes vernetzt oder chemisch oder physikalisch so umgewandelt, so dass die Gleitschicht eine formstabile, weitestgehend unlösliche und hochbelastbare dünne Schicht auf dem Substrat ausbildet. Die sich von selbst, d.h. ohne Druckeinwirkung ausbildende glatte Oberfläche ermöglicht das Applizieren einer Gleitlackbeschichtung auch auf bereits umgeformten Gleitelementen, wie der in Figur 3 gezeigten Lagerschalen.

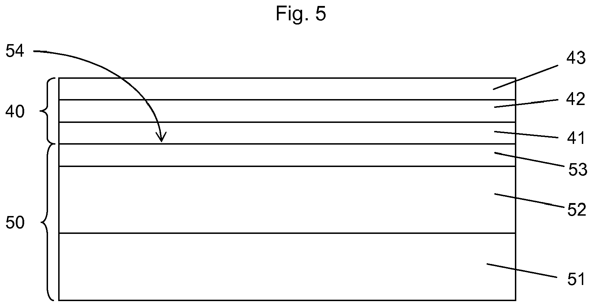

Figur 5 zeigt eine Prinzipskizze zur Illustration des Schichtaufbaus eines erfindungsgemäßen Gleitlager-Schichtverbundwerkstoffes, in dem noch einmal mehrere der vorstehend angesprochenen Schichtkombinationen exemplarisch zusammengefasst sind.

Der Gleitlager-Schichtverbundwerkstoff umfasst einerseits einen Gleitlackschichtverbund 40 mit mehreren Gleitlackbeschichtungen 41, 42, 43 und andererseits ein Substrat 50 aus mehreren Metallschichten 51, 52, 53. Zuunterst ist eine Stahlstützschicht 51 als stabilisierendes Element vorgesehen. Auf dieser ist eine Lagermetallschicht 52 angeordnet. Auf der Lagermetallschicht 52 ist eine Zwischenschicht 53 als Haftvermittler zu dem darüber liegenden Gleitlackschichtverbund 40 angeordnet. Auf diesen Haftvermittler kann je nach Zusammensetzung des Lagermetalls auch verzichtet werden, wenn die Lagermetallschicht eine ausreichende Haftgrundlage bildet, beispielsweise eine ausreichende Rauheit aufweist. Auf der Oberseite, also auf der der Stahlstützschicht 51 abgewandten Oberfläche 54 der Zwischenschicht 53 ist der Gleitlackschichtverbund 40 aufgebracht. Dieser weist eine erste Gleitlackbeschichtung 41 auf, die unmittelbar auf der Oberfläche 54 aufgebracht ist. Die Gleitlackbeschichtung 41 kann funktional unterschiedlich ausgelegt sein. Je nach den Eigenschaften des Lagermetalls oder der Zwischenschicht kann sie ebenfalls als Haftvermittler für die darüber liegende Gleitlackbeschichtung dienen. In diesem Fall kann sie nur geringe oder auch gar keine Füllstoffanteile enthalten und wäre daher nicht zwingend zu den erfindungsgemäßen Gleitlackbeschichtungen zu rechnen. Andernfalls kann sie zur weiteren Erhöhung der Betriebssicherheit dienen, indem eine Füllstoffkombination gewählt wird, die bezüglich ihrer Verschleißfestigkeit optimiert ist, so dass ein vollständiges Durchlaufen auf das Lagermaterial hinausgezögert werden kann, nachdem die darüber angeordnete untere Gleitlackbeschichtung 42 verschlissen ist. Dies kann z.B. durch eine Erhöhung des Binderanteils und des Anteils der härteren Bestandteile geschehen, wobei die Eigenschaften Anpassungsfähigkeit, Fressbeständigkeit und Reibung in den Hintergrund treten. Es wird dabei davon ausgegangen, dass diese Schicht zunächst nur lokal und langsam freigelegt wird und somit die Gleiteigenschaften der gesamten Oberfläche über einen längeren Zeitraum nicht wesentlich beeinträchtigt.

Die untere Gleitlackbeschichtung 42 weist erfindungsgemäß Zinksulfid und Bariumsulfat und ferner Festschmierstoffe und/oder Metallpulver, gegebenenfalls auch Hartstoffpartikel und/oder Eisen-(III)-Oxid in einer Zusammensetzung auf, die den besten Kompromiss für Tragfähigkeit und Verschleißfestigkeit einerseits und Anpassungsfähigkeit, Reibung und Fressbeständigkeit andererseits bildet und so eine langzeitstabile Schicht unter den vorgegebenen Einsatzbedingungen schafft.. Auf der unteren Gleitlackbeschichtung 42 ist dann die obere Gleitlackbeschichtung aufgebracht, die der vorstehend im Zusammenhang mit Figur 2 entspricht.

Besonders bevorzugte Ausführungsbeispiele einzelner Gleitlackbeschichtung haben die folgenden Bestandteile:
Beispiel a: PAI, BaSO₄, ZnS, h-BN, Fe₂O₃
Beispiel b: PAI, BaSO₄, ZnS, MoS₂, Fe₂O₃
Beispiel c: Epoxidharz, BaSO₄, ZnS, MoS₂, Fe₂O₃
Beispiel d: PEEK, BaSO₄, ZnS, PTFE, Fe₂O₃
Beispiel e: Silikonharz, BaSO₄, ZnS, Graphit, Fe₂O₃

Zur Bewertung der Leistungsfähigkeit der Gleitlackbeschichtungen bzw. der Gleitlager-Schichtverbundwerkstoffe wurden Underwood-Tests durchgeführt. Hierbei rotiert eine Welle mit Exzentergewichten in starr montierten Pleuelstangen. Die Lagerung in den Pleuelstangen wird durch die Prüflager gebildet. Die Prüflager haben eine Wanddicke von 1,4 mm und einen Durchmesser von 50 mm. Die spezifische Belastung wird über die Lagerbreite eingestellt, die Drehzahl beträgt 4000 U/m. Bewertungskriterien sind Gleitschichtermüdung und Verschleiß nach 100h Dauerlauf. Angegeben ist die Grenzbelastung (UW-Belastung) in MPa, bei der auf maximal 5% der Gleitfläche die Schicht bis zum Substrat verschlissen ist oder Ermüdung vorliegt.

Die folgende Tabelle 1 gibt die Testergebnisse für Gleitlager-Schichtverbundwerkstoffe mit Stahlrücken und einem CuNi2Si-Lagermetall als Substrat und verschiedenen Gleitlackbeschichtungen auf Basis eines PAI-Binders und ohne Zwischenschicht wieder. Gegenübergestellt sind drei Vergleichswerkstoffe R1 bis R3, die entweder nur Bariumsulfat, nur Zinksulfid oder keinen beider Füllstoffe enthielten, und erfindungsgemäße Beispiele mit unterschiedlichen Verhältnissen aus Bariumsulfat zu Zinksulfid. Die Füllstoffanteile waren bezogen auf die Gleitlackbeschichtungen ansonsten jeweils gleich gewählt.

**Tabelle 1**

| Nr | Substrat | Binder | BaSO4 [vol%] | ZnS [vol%] | Verh BaSO4/ZnS | Gesamtgehalt BaSO4+ZnS [vol%] | Festschmierstoff | max UW Last [MPa] |
|---|---|---|---|---|---|---|---|---|
| R1 | CuNi2Si | PAI | 0 | 0 | | 0 | 40 vol% MoS2 | 90 |
| R2 | CuNi2Si | PAI | 15 | 0 | ∞ | 15 | 25 vol% MoS2 | 80 |
| R3 | CuNi2Si | PAI | 0 | 15 | 0 | 15 | 25 vol% MoS2 | 85 |
| 1 | CuNi2Si | PAI | 1,4 | 13,6 | 0,10 | 15 | 25 vol% MoS2 | 95 |
| 2 | CuNi2Si | PAI | 6,7 | 8,3 | 0,81 | 15 | 25 vol% MoS2 | 100 |
| 3 | CuNi2Si | PAI | 9 | 6 | 1,50 | 15 | 25 vol% MoS2 | 105 |
| 4 | CuNi2Si | PAI | 11 | 4 | 2,75 | 15 | 25 vol% MoS2 | 110 |
| 5 | CuNi2Si | PAI | 11,8 | 3,2 | 3,69 | 15 | 25 vol% MoS2 | 105 |
| 6 | CuNi2Si | PAI | 12,4 | 2,6 | 4,77 | 15 | 25 vol% MoS2 | 100 |
| 7 | CuNi2Si | PAI | 14,1 | 0,9 | 15,67 | 15 | 25 vol% MoS2 | 95 |

Die Verhältnisse von BaSO₄ zu ZnS sind in Tabelle 1 so gewählt, dass die Wirksamkeit der erfindungsgemäß vorteilhaften Bereiche deutlich wird. Im Bereich des Verhältnisses von 0,1 bis 15,7 liegen die Belastbarkeiten über denen der nicht erfindungsgemäßen Verhältnisse, hier bei 95 MPa oder mehr. Zwischen 0,8 und 4,88 ergeben sich hier Werte über 100 MPa, zwischen 1,5 und 3,44 die höchsten Werte mit einem Optimum von 110 MPa bei einem BaSO₄/ZnS-Verhältnis von 2,75.

Die folgende Tabelle 2 gibt die Testergebnisse für Gleitlager-Schichtverbundwerkstoffe mit Stahlrücken und einem CuSn8Ni-Lagermetall als Substrat und verschiedenen Gleitlackbeschichtungen auf Basis eines PAI-Binders und ohne Zwischenschicht wieder. Drei nicht zur Erfindung gehörenden Referenzbeispielen gegenübergestellt sind vier erfindungsgemäße Beispiele mit etwa gleichem Verhältnis aus Bariumsulfat zu Zinksulfid aber unterschiedlichen Gesamtgehalten an Bariumsulfat und Zinksulfid und teils unterschiedlichen weiteren Füllstoffanteile des Festschmierstoffes MoS₂.

**Tabelle 2**

| Nr | Substrat | Binder | BaSO4 [vol%] | ZnS [vol%] | Verh BaSO4/ZnS | Gesamtgehalt BaSO4+ZnS [vol%] | Festschmierstoff | max UW Last [MPa] |
|---|---|---|---|---|---|---|---|---|
| R4 | CuSn8Ni | PAI | 0,73 | 0,26 | 2,81 | 0,99 | 25 vol% MoS2 | 75 |
| R5 | CuSn8Ni | PAI | 44 | 16 | 2,75 | 60 | 0 | 25 |
| R6 | CuSn8Ni | PAI | 38,9 | 14,1 | 2,76 | 53 | 25 vol% MoS2 | 30 |
| 8 | CuSn8Ni | PAI | 38,9 | 14,1 | 2,76 | 53 | 20 vol% MoS2 | 45 |
| 9 | CuSn8Ni | PAI | 1,47 | 0,53 | 2,77 | 2 | 25 vol% MoS2 | 80 |
| 10 | CuSn8Ni | PAI | 4,4 | 1,6 | 2,75 | 6 | 25 vol% MoS2 | 85 |
| 11 | CuSn8Ni | PAI | 18,3 | 6,7 | 2,73 | 25 | 25 vol% MoS2 | 85 |

Die Gesamtmengen des BaSO₄ - ZnS-Gemisches sind in Tabelle 2 so gewählt, dass die Wirksamkeit der erfindungsgemäß vorteilhaften Bereiche deutlich wird. Im Mengenbereich von 2 bis 25 Vol.-% liegen die Belastbarkeiten über denen der nicht erfindungsgemäßen oder erfindungsgemäß weniger vorteilhaften Verhältnisse, wie der Vergleich der Bsp. 9, 10, 11 mit den Referenzbeispielen R4 und R5 zeigt. Den Effekt einer Überdosierung des Gehaltes aller Füllstoffe zusammen belegt der Vergleich von R6 (78 Vol.-%) mit Bsp. 8 (73 Vol.-%). Die Belastbarkeit von Bsp. 8 ist mit 45 MPa zwar eher niedrig, dies kann jedoch für eine Einlaufschicht, z.B. in einem Mehrschicht-System durchaus ausreichend sein. Bsp. 8 ist darüberhinaus signifikant besser als das nicht erfindungsgemäße Beispiel R6, bei dem die Gesamtfüllstoffmenge den Grenzwert von 75% überschreitet.

Die folgende Tabelle 3 gibt die Testergebnisse für Gleitlager-Schichtverbundwerkstoffe mit Stahlrücken und einem CuNi2Si-Lagermetall als Substrat und verschiedenen Gleitlackbeschichtungen auf Basis eines PAI-Binders und ohne Zwischenschicht wieder. Gegenübergestellt sind vier erfindungsgemäße Beispiele mit im Wesentlichen gleichen Verhältnissen und gleichen Gesamtgehalten von Bariumsulfat und Zinksulfid, wobei diese Füllstoffe in zwei Fällen jedoch in Form von Lithopone mit einem BaSO₄/ZnS Volumenverhältnis von 2,13 (Mengenangaben mit "L") beigefügt wurden. Variiert wurden außerdem jeweils der Festschmierstoff, dessen Anteil an der Gesamtzusammensetzung der Gleitlackbeschichtung allerdings jeweils gleich blieb. Zusätzlich wurde in drei Beispielen Fe₂O₃ eingesetzt.

**Tabelle 3**

| Nr | Substrat | Binder | BaSO4 [vol%] | ZnS [vol%] | Verh BaSO4/ZnS | Gesamtgehalt BaSO4+ZnS [vol%] | Festschmierstoff | Menge Fe2O3 [vol%] | max UW Last [MPa] |
|---|---|---|---|---|---|---|---|---|---|
| 12 | CuNi2Si | PAI | 10,2 L | 4,8 L | 2,13 | 15 | 25 vol% MoS2 | | 110 |
| 13 | CuNi2Si | PAI | 11 | 4 | 2,75 | 15 | 20 vol% MoS2 | 5 | 115 |
| 14 | CuNi2Si | PAI | 10,2 | 4,8 | 2,13 | 15 | 20 vol% hBN | 5 | 115 |
| 15 | CuNi2Si | PAI | 10,2 L | 4,8 L | 2,13 | 15 | 20 vol% hBN | 5 | 120 |

Die Tabelle 3 belegt, dass durch Einsatz von Lithopone anstelle eines Gemisches aus BaSO₄ und ZnS sowie der Verwendung von Fe₂O₃ weitere Verbesserungen erreichbar sind, im Optimum bis hin zu einer Belastbarkeit von 120 MPa.

Die folgende Tabelle 4 gibt die Testergebnisse für Gleitlager-Schichtverbundwerkstoffe mit Stahlrücken und einem CuNi2Si-Lagermetall als Substrat und verschiedenen Gleitlackbeschichtungen auf Basis unterschiedlicher Matrixmaterialien ohne Zwischenschicht wieder. Gegenübergestellt sind 10 Vergleichswerkstoffe, mit vorangestelltem "R" gekennzeichnet, die weder Bariumsulfat noch Zinksulfid enthalten, und jeweils ein zugeordneter erfindungsgemäßer Werkstoff mit identischer Gesamtfüllstoffmenge aber unterschiedlichen Füllstoff-Zusammensetzungen. Auch hier wurden in einem Fall das Bariumsulfat und das Zinksulfid in Form von Lithopone (Kennzeichnung "L") beigefügt.

**Tabelle 4**

| Nr | Substrat | Binder | BaSO4 [vol%] | ZnS [vol%] | Verh BaSO4/ZnS | Gesamtgehalt BaSO4+ZnS [vol%] | Festschmierstof f | Hartstoff | Metall | Menge Fe2O3 [vol%] | max UW Last [MPa] |
|---|---|---|---|---|---|---|---|---|---|---|---|
| 16 | CuNi2Si | PAI | 7,3 | 2,7 | 2,65 | 10 | 20 vol% hBN | 5 vol% SiC | | | 110 |
| R16 | CuNi2Si | PAI | | | | 0 | 30 vol% hBN | 5 vol% SiC | | | 85 |
| 17 | CuNi2Si | PAI | 11 | 4 | 2,75 | 15 | 20 vol% MoS2 | | | | 105 |
| R17 | CuNi2Si | PAI | | | | 0 | 20 vol% MoS2 | | | | 85 |
| 18 | CuNi2Si | PAI | 5,9 | 2,1 | 2,81 | 8 | 15 vol% WS2 | | | | 110 |
| R18 | CuNi2Si | PAI | | | | 0 | 23 vol% WS2 | | | | 90 |
| 19 | CuNi2Si | PAI | 3,7 | 1,3 | 2,84 | 5 | 12 vol% Graphit | | | 3 | 95 |
| R19 | CuNi2Si | PAI | | | | 0 | 17 vol% Graphit | | | 3 | 90 |
| 20 | CuNi2Si | PAI | 10,2 L | 4,8 L | 2,13 | 15 | 20 vol% PTFE | | | | 95 |
| R20 | CuNi2Si | PAI | | | | 0 | 30 vol% PTFE | | | | 80 |
| 21 | CuNi2Si | PEEK | 10 | 5 | 2 | 15 | 20 vol% MoS2 | | | | 100 |
| R21 | CuNi2Si | PEEK | | | | 0 | 35 vol% MoS2 | | | | 85 |
| 22 | CuSn10Bi3 | PAI | 4 | 1 | 4 | 5 | 15 vol% MoS2 | 5 vol% | | 5 | 95 |
| R22 | CuSn10Bi3 | PAI | | | | 0 | 20 vol% MoS2 | 5 vol% | | 5 | 85 |
| 23 | CuSn10Bi3 | PES | 18 | 7 | 2,57 | 25 | 15 vol% MoS2 | | | | 105 |
| R23 | CuSn10Bi3 | PES | | | | 0 | 40 vol% MoS2 | | | | 95 |
| 24 | CuSn10Bi3 | EP | 11 | 4 | 2,75 | 15 | 20 vol% MoS2 | | | | 105 |
| R24 | CuSn10Bi3 | EP | | | | 0 | 20 vol% MoS2 | | | | 85 |
| 25 | CuSn10Bi3 | PAI | 3,7 | 1,3 | 2,84 | 5 | 15 vol% hBN | | 15 vol% Sn | 3 | 95 |
| R25 | CuSn10Bi3 | PAI | | | 2,84 | 0 | 20 vol% hBN | | 15 vol% Sn | 3 | 80 |

In allen Fällen wird durch die Verwendung des erfindungsgemäßen BaSO₄/ZnS-Gemisches in besonders bevorzugter Zusammensetzung und Menge eine signifikante Verbesserung erreicht. Die Beispiele 21, 23 und 24 zeigen anhand der Thermoplaste PEEK und PES, und des duroplastischen Epoxy-Harzes, dass dies auch für andere Bindertypen als dem in den Versuchen überwiegend verwendeten PAI gilt.

Die folgende Tabelle 5 gibt die Testergebnisse für Gleitlager-Schichtverbundwerkstoffe mit einem Stahlrücken und CuSn10Bi3-Lagermetall als Substrat und verschiedenen Gleitlackbeschichtungen auf Basis eines PAI-Binders mit zwei unterschiedlichen Zwischenschichten wieder. Gegenübergestellt sind drei Vergleichswerkstoffe, mit vorangestelltem "R" gekennzeichnet, die weder Bariumsulfat noch Zinksulfid enthalten, und jeweils ein zugeordneter erfindungsgemäßer Werkstoff mit unterschiedlichen Füllstoff-Zusammensetzungen. Auch hier wurden in einem Fall das Bariumsulfat und das Zinksulfid in Form von Lithopone beigefügt (Kennzeichnung "L").

**Tabelle 5**

| Nr | Substrat | Zwischenschicht | Binder | BaSO4 [vol%] | ZnS [vol%] | Verh BaSO4/ZnS | Gesamtgehalt BaSO4+ZnS [vol%] | Festschmierstoff | max UW Last [MPa] |
|---|---|---|---|---|---|---|---|---|---|
| 26 | CuSn10Bi3 | Ni | PAI | 11 | 4 | 2,75 | 15 | 20 vol% MoS2 | 110 |
| R26 | CuSn10Bi3 | Ni | PAI | | | | 0 | 20 vol% MoS2 | 90 |
| 27 | CuSn10Bi3 | Ni | PAI | 7,3 | 2,7 | 2,65 | 10 | 30 vol% MoS2 | 95 |
| R27 | CuSn10Bi3 | Ni | PAI | | | | 0 | 40 vol% MoS2 | 90 |
| 28 | CuSn10Bi3 | Ag | PAI | 10,2 L | 4,8 L | 2,13 | 15 | 30 vol% MoS2 | 110 |
| R28 | CuSn10Bi3 | Aq | PAI | | | | 0 | 40 vol% MoS2 | 90 |

Es ist erkennbar, dass die Verwendung der Zwischenschichten die Wirksamkeit des BaSO₄/ZnS-Gemisches nicht beeinträchtigt. Ein Vergleich des Beispiels 26 mit Bsp. 17 in Tabelle 4 zeigt, dass sich auch durch die Änderung des Substrates von CuNi2Si in CuSn10Bi3 mit einer Ni-Zwischenschicht eine Verbesserung der Belastbarkeit erzielen lässt.

Die folgende Tabelle 6 gibt die Testergebnisse für Gleitlager-Schichtverbundwerkstoffe mit verschiedenen Aluminium-basierten Substraten und verschiedenen Gleitlackbeschichtungen auf Basis unterschiedlicher Matrixmaterialien ohne Zwischenschicht wieder. Gegenübergestellt sind 6 erfindungsgemäße Beispiele mit unterschiedlichen Verhältnissen aus Bariumsulfat zu Zinksulfid und unterschiedlichen Gesamtanteilen dieser Füllstoffe. Auch die weiteren Füllstoffanteile wurden variiert. Schließlich wurden auch hier in einem Fall das Bariumsulfat und das Zinksulfid in Form von Lithopone (Kennzeichnung "L") beigefügt.

**Tabelle 6**

| Nr | Substrat | Binder | BaSO4 [vol%] | ZnS [vol%] | Verh BaSO4/ZnS | Gesamtgehalt BaSO4+ ZnS [vol%] | Festschmierstof f | Hartstoff | Metall | Menge Fe2O3 [vol%] | max UW Last [MPa] |
|---|---|---|---|---|---|---|---|---|---|---|---|
| 29 | AlSn10Ni2MnCu | PAI | 3,7 | 1,3 | 2,84 | 5 | 20 vol% hBN | | | | 90 S |
| 30 | AlSn10Ni2MnCu | PES | 10,2 L | 4,8 L | 2,13 | 15 | 15 vol% MoS2 | | | 3 | 95 S |
| 31 | AlNi2MnCu | PAI | 18 | 7 | 2,57 | 25 | 15 vol% WS2 | 5 vol% SiC | | | 95 |
| 32 | AlNi2MnCu | EP | 18 | 7 | 2,57 | 25 | 15 vol% hBN | | | 5 | 95 |
| 33 | AlSn6Si4CuMnCr | PAI | 7,3 | 2,7 | 2,65 | 10 | 20 vol% MoS2 | 3 vol% B4C | | 5 | 80 S |
| 34 | AlSn6Si4CuMnCr | PEEK | 4 | 1 | 4 | 5 | 20 vol% hBN | | 7 vol% Ag | 3 | 85 S |

Die Ergebnisse zeigen, dass auch auf Substraten auf Aluminium-Basis die Belastbarkeit durch Zusatz von BaSO₄/ZnS Gemischen zum Gleitlack weiter verbessert wird. Da die Al-Legierungen weniger ermüdungsfest sind als die Cu-Legierungen, ist die Belastungsgrenze bei den Tests oft nicht durch die Gleitlackbeschichtung limitiert sondern durch die Ermüdung des Substrates selbst. In diesen Fällen sind die Ergebnisse mit "S" gekennzeichnet. Die Ermüdungsfestigkeit der Al-Legierungen wird durch die Lackbeschichtungen jedoch deutlich verbessert, und auch diese Verbesserung ist abhängig von der Art des eingesetzten Lackes, was in Tabelle 6 deutlich erkennbar ist.

### Bezugszeichenliste

- 10: Gleitlackschichtverbund
- 11: untere Gleitlackbeschichtung
- 12: Gleitlackbeschichtung
- 13: obere Gleitlackbeschichtung
- 14: Substrat
- 15: Oberfläche des Substrats
- 16: Binder, Matrix
- 18: Zinksulfid (ZnS)
- 20: Bariumsulfat (BaSO₄)
- 22: Hartstoff
- 24: Metallpartikel
- 26: Festschmierstoff
- 28: Eisen-(III)-oxid

- 30: Gleitlackschichtverbund
- 31: untere Gleitlackbeschichtung
- 33: obere Gleitlackbeschichtung

- 38: Lagerschale

- 40: Gleitlackschichtverbund
- 41: erste Gleitlackbeschichtung
- 42: untere Gleitlackbeschichtung
- 43: obere Gleitlackbeschichtung
- 50: Metallschichtverbund
- 51: Stahlstützschicht
- 52: Zwischenschicht
- 53: Lagermetallschicht
- 54: Oberfläche der Lagermetallschicht

## Patentansprüche

1. Gleitlackbeschichtung (11, 12, 13, 41, 42, 43) mit wenigstens 25 Vol.-% eines Binders (16) und mit Füllstoffen, die Zinksulfid (18) und Bariumsulfat (20) und wahlweise weitere Füllstoffe umfassen,
wobei das Volumenverhältnis von Bariumsulfat (20) zu Zinksulfid (18) zwischen 0,1 und 15,7 beträgt.

2. Gleitlackbeschichtung (11, 12, 13, 41, 42, 43) nach Anspruch 1,
**dadurch gekennzeichnet, dass** das Zinksulfid (18) und das Bariumsulfat (20) zusammen in einem Anteil von 2 bis 35 Vol.-% in der Gesamtzusammensetzung enthalten sind.

3. Gleitlackbeschichtung (11, 12, 13, 41, 42, 43) nach Anspruch 2,
**dadurch gekennzeichnet, dass** das Zinksulfid (18), das Bariumsulfat (20) und die weiteren Füllstoffe (28) zusammen in einem Anteil von maximal 75 Vol.-% in der Gesamtzusammensetzung enthalten sind.

4. Gleitlackbeschichtung (11, 12, 13, 41, 42, 43) nach einem der vorstehenden Ansprüche,
**dadurch gekennzeichnet, dass** das Zinksulfid (18) und das Bariumsulfat (20) in Pulverform mit einem d50-Wert im Bereich von 0,1 µm bis 1,0 µm vorliegt.

5. Gleitlackbeschichtung (11, 12, 13, 41, 42, 43) nach einem der vorstehenden Ansprüche,
**dadurch gekennzeichnet, dass** der Zinksulfid- und Bariumsulfat-Anteil in Form von Lithopone vorliegt.

6. Gleitlackbeschichtung (11, 12, 13, 41, 42, 43) nach einem der vorstehenden Ansprüche,
**dadurch gekennzeichnet, dass** der Binder ausgewählt ist aus der Gruppe bestehend aus PAI, PI, Epoxyharze, PBI, Silikonharze und hocharomatische Thermoplaste, insbesondere Polyarylate, PEEK und PES.

7. Gleitlackbeschichtung (11, 12, 13, 41, 42, 43) nach einem der vorstehenden Ansprüche,
**dadurch gekennzeichnet, dass** die weiteren Füllstoffe (28) wenigstens einen Festschmierstoff enthalten.

8. Gleitlackbeschichtung (11, 12, 13, 41, 42, 43) nach einem der vorstehenden Ansprüche,
**dadurch gekennzeichnet, dass** die weiteren Füllstoffe (28) wenigstens einen Hartstoff mit einem Gesamtanteil von nicht mehr als 10 Vol.-% enthalten.

9. Gleitlackbeschichtung (11, 12, 13, 41, 42, 43) nach einem der vorstehenden Ansprüche,
**dadurch gekennzeichnet, dass** die weiteren Füllstoffe (28) wenigstens ein Metallpulver mit einem Gesamtanteil von nicht mehr als 30 Vol.-% enthalten.

10. Gleitlackbeschichtung (11, 12, 13, 41, 42, 43) nach einem der vorstehenden Ansprüche,
**dadurch gekennzeichnet, dass** die weiteren Füllstoffe (28) bis zu 15 Vol.-% Eisen-(III)-oxid umfassen.

11. Gleitlackbeschichtung nach einem der vorstehenden Ansprüche, **dadurch gekennzeichnet, dass** die weiteren Füllstoffe (28) 4 bis 10 Vol.-% Eisen-(III)-oxid umfassen.

12. Gleitlackschichtverbund (10, 40) mit wenigstens zwei Gleitlackbeschichtungen unterschiedlicher Zusammensetzung nach einem der Ansprüche 1 bis 11.

13. Gleitlager-Schichtverbundwerkstoff mit mindestens einer Metallschicht (51, 52, 53) und einer auf einer Oberfläche (54) der Metallschicht (51, 52, 53) aufgebrachten Gleitlackbeschichtung (41, 42, 43) nach einem der Ansprüche 1 bis 11 oder einem auf einer Oberfläche der Metallschicht aufgebrachten Gleitlackschichtverbund (40) nach Anspruch 12.

14. Gleitlager-Schichtverbundwerkstoff nach Anspruch 13,
**dadurch gekennzeichnet, dass** die Oberfläche (54) der mindestens einen Metallschicht (51, 52, 53), auf der die Gleitlackbeschichtung (41, 42, 43) oder der Gleitlackschichtverbund (40) aufgebracht ist, eine Rauheit R_{z} von 1 µm bis 10 µm aufweist.

15. Gleitlager-Schichtverbundwerkstoff nach einem der Ansprüche 13 oder 14,
**dadurch gekennzeichnet, dass** die mindestens eine Metallschicht (51, 52, 53) eine Lagermetallschicht (53) aus einer Legierung auf Basis eines der Elemente, ausgewählt aus der Gruppe bestehend aus Cu, Al, Ni, Sn, Zn, Ag, Au, Bi, und Fe, aufweist.

16. Gleitlager-Schichtverbundwerkstoff nach Anspruch 15,
**dadurch gekennzeichnet, dass** die mindestens eine Metallschicht (51, 52, 53) eine Stahlstützschicht (51) und wahlweise eine auf der Stahlstützschicht (51) aufgebrachten Zwischenschicht (52) aus Ni, Ag, Cu oder Fe aufweist, wobei die Lagermetallschicht (53) auf der Stahlstützschicht (51) oder, sofern vorhanden, auf der Zwischenschicht (52) aufgebracht ist und wobei die Gleitlackbeschichtung (41, 42, 43) oder der Gleitlackschichtverbund (40) auf einer Oberfläche der Lagermetallschicht (53) auf der der Stahlstützschicht (51) abgewandten Seite aufgebracht ist.

17. Verwendung eines Gleitlager-Schichtverbundwerkstoffes nach einem der Ansprüche 13 bis 16 in einem Lagerelement für einen Verbrennungsmotor.

## Claims

1. Sliding lacquer coating (11, 12, 13, 41, 42, 43) having at least 25% by volume of a binder (16) and having filling materials which comprise zinc sulphide (18) and barium sulphate (20) and optionally additional filling materials, wherein the volume ratio of barium sulphate (20) to zinc sulphide (18) is between 0.1 and 15.7.

2. Sliding lacquer coating (11, 12, 13, 41, 42, 43) according to claim 1,
**characterised in that** the zinc sulphide (18) and the barium sulphate (20) are contained together in a proportion of from 2 to 35% by volume in the total composition.

3. Sliding lacquer coating (11, 12, 13, 41, 42, 43) according to claim 2,
**characterised in that** the zinc sulphide (18), the barium sulphate (20) and the additional filling materials (28) are contained together in a proportion of a maximum of 75% by volume in the total composition.

4. Sliding lacquer coating (11, 12, 13, 41, 42, 43) according to any one of the preceding claims,
**characterised in that** the zinc sulphide (18) and the barium sulphate (20) are present in powdered form with a d50 value in the range from 0.1 µm to 1.0 µm.

5. Sliding lacquer coating (11, 12, 13, 41, 42, 43) according to any one of the preceding claims,
**characterised in that** the zinc sulphide and barium sulphate proportion is present in the form of lithopones.

6. Sliding lacquer coating (11, 12, 13, 41, 42, 43) according to any one of the preceding claims,
**characterised in that** the binder is selected from the group comprising PAI, PI, epoxy resins, PBI, silicone resins and highly aromatic thermoplastics, in particular polyarylates, PEEK and PES.

7. Sliding lacquer coating (11, 12, 13, 41, 42, 43) according to any one of the preceding claims,
**characterised in that** the additional filling materials (28) contain at least one solid lubricant.

8. Sliding lacquer coating (11, 12, 13, 41, 42, 43) according to any one of the preceding claims,
**characterised in that** the additional filling materials contain at least one hard material having a total proportion of no more than 10% by volume.

9. Sliding lacquer coating (11, 12, 13, 41, 42, 43) according to any one of the preceding claims,
**characterised in that** the additional filling materials (28) contain at least one metal powder having a total proportion of no more than 30% by volume.

10. Sliding lacquer coating (11, 12, 13, 41, 42, 43) according to any one of the preceding claims,
**characterised in that** the additional filling materials (28) comprise up to 15% by volume of iron (III) oxide.

11. Sliding lacquer coating according to any one of the preceding claims,
**characterised in that** the additional filling materials (28) comprise from 4 to 10% by volume of iron (III) oxide.

12. Sliding lacquer layered composite (10, 40) having at least two sliding lacquer coatings of different compositions according to any one of claims 1 to 11.

13. Sliding bearing layered composite material having at least one metal layer (51, 52, 53) and a sliding lacquer coating (41, 42, 43) which is applied to a surface (54) of the metal layer (51, 52, 53) according to any one of claims 1 to 11 or a sliding lacquer layered composite (40) which is applied to a surface of the metal layer according to claim 12.

14. Sliding bearing layered composite material according to claim 13,
**characterised in that** the surface (54) of the at least one metal layer (51, 52, 53) on which the sliding lacquer coating (41, 42, 43) or the sliding lacquer layered composite (40) is applied has a roughness R_{Z} of from 1 µm to 10 µm.

15. Sliding bearing layered composite material according to either claim 13 or claim 14,
**characterised in that** the at least one metal layer (51, 52, 53) has a bearing metal layer (53) of an alloy based on one of the elements selected from the group comprising Cu, Al, Ni, Sn, Zn, Ag, Au, Bi and Fe.

16. Sliding bearing layered composite material according to claim 15,
**characterised in that** the at least one metal layer (51, 52, 53) has a steel support layer (51) and optionally an intermediate layer of Ni, Ag, Cu or Fe applied to the steel support layer (51), wherein the bearing metal layer (53) is applied to the steel support layer (51) or, if present, is applied to the intermediate layer (52) and wherein the sliding lacquer coating (41, 42, 43) or the sliding lacquer layered composite (40) is applied to a surface of the bearing metal layer (53) on the side facing away from the steel support layer (51).

17. Use of a sliding bearing layered composite material according to any one of claims 13 to 16 in a bearing element for an internal combustion engine.

## Revendications

1. Revêtement en vernis de glissement (11, 12, 13, 41, 42, 43) comprenant au moins 25 % en volume d'un liant (16) et des charges qui comprennent du sulfure de zinc (18) et du sulfate de baryum (20) et éventuellement d'autres charges,
dans lequel le rapport en volume du sulfate de baryum (20) sur le sulfure de zinc (18) se situe entre 0,1 et 15,7.

2. Revêtement en vernis de glissement (11, 12, 13, 41, 42, 43) selon la revendication 1,
**caractérisé en ce que** le sulfure de zinc (18) et le sulfate de baryum (20) sont contenus ensemble dans une proportion de 2 à 35 % en volume dans la composition totale.

3. Revêtement en vernis de glissement (11, 12, 13, 41, 42, 43) selon la revendication 2,
**caractérisé en ce que** le sulfure de zinc (18), le sulfate de baryum (20) et les autres charges (28) sont contenus ensemble dans une proportion d'au plus 75 % en volume dans la composition totale.

4. Revêtement en vernis de glissement (11, 12, 13, 41, 42, 43) selon l'une des revendications précédentes,
**caractérisé en ce que** le sulfure de zinc (18) et le sulfure de baryum (20) sont présents sous forme de poudre avec une valeur d50 dans la plage de 0,1 µm à 1,0 µm.

5. Revêtement en vernis de glissement (11, 12, 13, 41, 42, 43) selon l'une des revendications précédentes,
**caractérisé en ce que** la proportion de sulfure de zinc et de sulfate de baryum est présente sous la forme de lithopones.

6. Revêtement en vernis de glissement (11, 12, 13, 41, 42, 43) selon l'une des revendications précédentes,
**caractérisé en ce que** le liant est choisi dans le groupe constitué par PAI, PI, résines époxy, PBI, résines silicones et thermoplastiques hautement aromatiques, en particulier polyarylates, PEEK et PES.

7. Revêtement en vernis de glissement (11, 12, 13, 41, 42, 43) selon l'une des revendications précédentes,
**caractérisé en ce que** les autres charges (28) contiennent au moins un lubrifiant solide.

8. Revêtement en vernis de glissement (11, 12, 13, 41, 42, 43) selon l'une des revendications précédentes,
**caractérisé en ce que** les autres charges (28) contiennent au moins une matière dure dans une proportion totale non supérieure à 10 % en volume.

9. Revêtement en vernis de glissement (11, 12, 13, 41, 42, 43) selon l'une des revendications précédentes,
**caractérisé en ce que** les autres charges (28) contiennent au moins une poudre métallique dans une proportion totale non supérieure à 30 % en volume.

10. Revêtement en vernis de glissement (11, 12, 13, 41, 42, 43) selon l'une des revendications précédentes,
**caractérisé en ce que** les autres charges (28) comprennent jusqu'à 15 % en volume d'oxyde de fer (III).

11. Revêtement en vernis de glissement selon l'une des revendications précédentes,
**caractérisé en ce que** les autres charges (28) comprennent de 4 à 10 % en volume d'oxyde de fer (III).

12. Système multicouche de vernis de glissement (10, 40) comportant au moins deux revêtements en vernis de glissement de composition différente selon l'une des revendications 1 à 11.

13. Matériau multicouche pour palier lisse comportant au moins une couche métallique (51, 52, 53) et un revêtement en vernis de glissement (41, 42, 43) selon l'une des revendications 1 à 11 appliqué sur une surface (54) de la couche métallique (51, 52, 53) ou un système multicouche de vernis de glissement (40) selon la revendication 12 appliqué sur une surface de la couche métallique.

14. Matériau multicouche pour palier lisse selon la revendication 13,
**caractérisé en ce que** la surface (54) de ladite au moins une couche métallique (51, 52, 53) sur laquelle est appliqué le revêtement en vernis de glissement (41, 42, 43) ou le système multicouche de vernis de glissement (40) présente une rugosité R_{z} de 1 µm à 10 µm.

15. Matériau multicouche pour palier lisse selon l'une des revendications 13 ou 14,
**caractérisé en ce que** ladite au moins une couche métallique (51, 52, 53) présente une couche métallique de palier (53) dans un alliage à base d'un des éléments choisis dans le groupe constitué par Cu, Al, Ni, Sn, Zn, Ag, Au, Bi et Fe.

16. Matériau multicouche pour palier lisse selon la revendication 15,
**caractérisé en ce que** ladite au moins une couche métallique (51, 52, 53) présente une couche de support en acier (51) et éventuellement une couche intermédiaire (52) en Ni, Ag, Cu ou Fe appliquée sur la couche de support en acier (51), la couche métallique de palier (53) étant appliquée sur la couche de support en acier (51) ou, le cas échéant, sur la couche intermédiaire (52), et le revêtement en vernis de glissement (41, 42, 43) ou le système multicouche de vernis de glissement (40) étant appliqué sur une surface de la couche métallique de palier (53) du côté opposé à la couche de support en acier (51).

17. Utilisation d'un matériau multicouche pour palier lisse selon l'une des revendications 13 à 16 dans un élément de palier pour un moteur à combustion interne.
